## Europäisches Patentamt

## European Patent Office

## Office européen des brevets

(19)

(11) Numéro de publication: **0 225 211**
**B1**

(12) **FASCICULE DE BREVET EUROPEEN**

(45) Date de publication du fascicule du brevet:
06.12.89

(51) Int. Cl.⁴: **B60K 20/04, B60K 41/22**

(21) Numéro de dépôt: **86402299.1**

(22) Date de dépôt: **15.10.86**

(54) **Dispositif de sécurité de commande de marche arrière pour levier de vitesse cassé.**

(30) Priorité: **30.10.85 FR 8516128**

(43) Date de publication de la demande:
**10.06.87 Bulletin 87/24**

(45) Mention de la délivrance du brevet:
**06.12.89 Bulletin 89/49**

(84) Etats contractants désignés:
**DE GB IT**

(56) Documents cités:
**EP-A- 0 028 950**
**EP-A- 0 038 123**
**DE-A- 2 062 642**
**FR-A- 1 562 903**
**FR-A- 2 476 346**
**US-A- 3 998 110**

(73) Titulaire: **VALEO, 64 Avenue de la Grande Armée,
F-75017 Paris(FR)**

(72) Inventeur: **Bertin, Patrice, 20, rue Victor Hugo,
F-95540 Mery-sur-Oise(FR)**
Inventeur: **Arhab, Rabah, 33, rue Paul Laffargue,
F-93380 Pierrefitte(FR)**

(74) Mandataire: **CABINET BONNET-THIRION, 95 Boulevard
Beaumarchais, F-75003 Paris(FR)**

ACTORUM AG

**Description**

La présente invention concerne d'une manière générale les leviers de commande de boîte de vitesses comportant un dispositif de sécurité empêchant le passage involontaire de la marche arrière. Plus précisément la présente invention concerne l'adaptation d'un tel dispositif de sécurité à un levier de commande de boîte de vitesses du type dit cassé.

Le passage involontaire de la marche arrière d'un véhicule automobile, outre les dommages qu'il peut faire subir aux divers organes mécaniques est dangereux pour les usagers. C'est pourquoi il est connu, notamment par EU-A 28 950 et EU-A38 123, au levier de vitesse un dispositif de sécurité généralement constitué d'une jupe entourant coaxialement le levier de vitesse. Cette jupe est munie à son extrémité inférieure d'une bride de butée constituée d'un disque ayant un doigt venant en butée contre un trottoir de butée, fixe, et à son extrémité supérieure d'une gâchette permettant de manœuvrer axialement la jupe le long du levier de vitesse.

Des moyens élastiques à action axiale maintiennent la jupe, en l'absence de sollicitation, dans une position telle que la bride de butée soit au même niveau que le trottoir de butée. Dans cette position, la bride empêche tout déplacement angulaire du levier dans une direction définie commandant l'enclenchement de la marche arrière.

Lorsque le conducteur souhaite enclencher la marche arrière, il doit soulever la gâchette, qui décale, par l'intermédiare de la jupe, la bride de butée qui peut dès lors passer au-dessus du trottoir lorsque le levier est poussé angulairement dans la direction qui commande la marche arrière.

L'avantage d'un tel dispositif est qu'il interdit tout passage involontaire de la marche arrière.

Son inconvénient, connu en soi, est qu'il nécessite un coulissement axial autour du levier de commande de boîte de vitesses.

Une telle construction n'a jusqu'à présent pas pu être adaptée à un levier de changement de vitesse du type levier cassé qui vécessite dans son utilisation le désalignement des deux parties du levier par rapport à l'autre. Le désalignement des deux parties d'un levier cassé est utilisé pour établir des contacts électriques; dès que le levier n'est pas sollicité, les deux parties sont rappelées en alignement par des moyens élastiques appropriés et les contacts électriques sont alors interrompus. Une telle technique a déjà été décrite dans la demande de brevet FR Nо. 8 500 243 déposée par la Demanderesse en date du 9 janvier 1985 et publiée sous le Nо. 2 575 707.

L'objet de la présente invention est un dispositif de sécurité d'enclenchement de la marche arrière adapté à un levier du type cassé.

Plus précisément, la présent invention a pour objet un dispositif de sécurité destiné à éviter l'enclenchement intempestif de la marche arrière en coopération avec un levier de vitesse du type dit cassé, du genre comportant une jupe disposée autour de ce dernier, mobile axialement en étant solidaire axialement d'un manchon coulissant muni d'une bride de butée escamotable qui coopère en position dite basse avec une butée fixe pour empêcher certains mouvements déterminés du levier de vitesse, caractérisé en ce que des moyens de solidarisation de ladite jupe et dudit manchon coulissant permettent à ces derniers un déplacement relatif dans au moins une direction perpendiculaire à l'axe du manchon.

Un autre aspect essentiel de l'invention est l'existence de moyens de centrage de la jupe autour de la partie supérieure du levier permettant un déplacement relatif de celle-ci dans au moins une direction perpendiculaire à l'axe de la partie supérieure du levier.

Un tel dispositif est apte à coopérer avec levier cassé. En effet les déplacements relatifs possibles entre la jupe et la partie supérieure du levier, et entre la jupe et le manchon permettent au dispositif de sécurité de ne pas empêcher le désalignement nécessaire entre les deux parties du levier cassé pour établir les contacts électriques de commande de l'embrayage.

Les caractéristiques et avantages de la présente invention ressortiront d'ailleurs de la description qui va suivre d'un mode préférentiel de réalisation, en référence aux dessins annexés, dans lesquels :

la figure 1 représente une coupe dans le sens axial d'un dispositif de sécurité selon l'invention coopérant avec un levier cassé ;

la figure 2 représente une vue agrandie en coupe axiale de la partie supérieure d'un levier muni d'un dispositif selon l'invention ;

la figure 3 représente en coupe axiale la partie inférieure correspondante ;

la figure 4 représente en coupe axiale le levier cassé muni du dispositif de sécurité dans la position pour laquelle il établit un contact électrique.

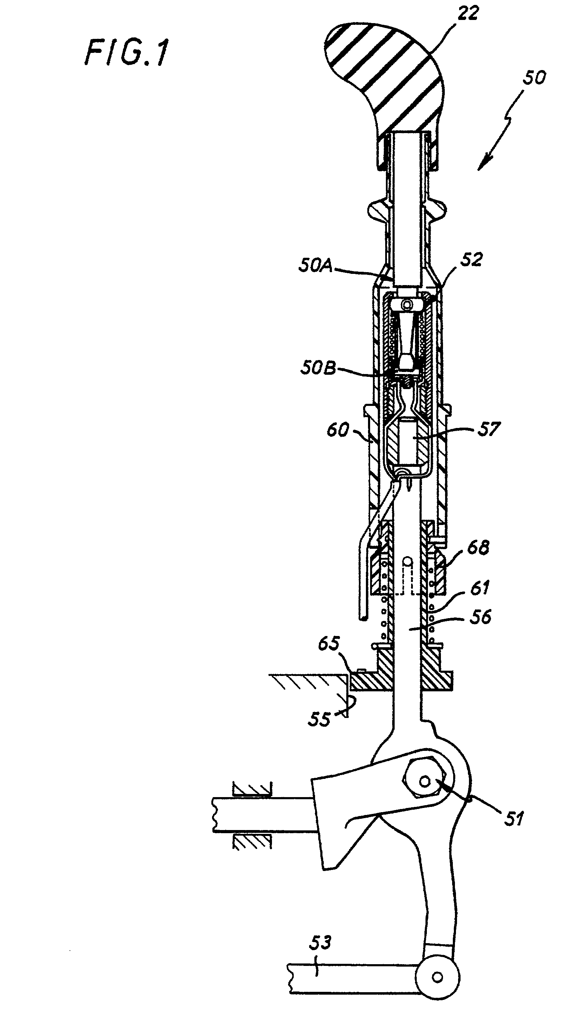

Plus en détail, en référence aux figures 1, 2 et 3, un levier cassé 50 comporte une partie inférieure 50B et une partie supérieure 50A.

De manière connue en soi, le levier 50 est articulé à sa partie basse autour d'un point d'articulation 51, afin de transmettre les mouvements du levier à une timonerie, dont le premier élément est ici référencé 53.

Le levier cassé 50 est, de façon connue, formé de deux tronçons 50A et 50B articulés en 52. Un tel levier est décrit dans le brevet FR Nº 1 562 903 au nom de la Demanderesse ou dans une variante permettant de détecter non seulement un effort sur le levier de vitesse mais aussi le sens de cet effort selon la demande de brevet FR Nº 85 00 243 ci-dessus citée.

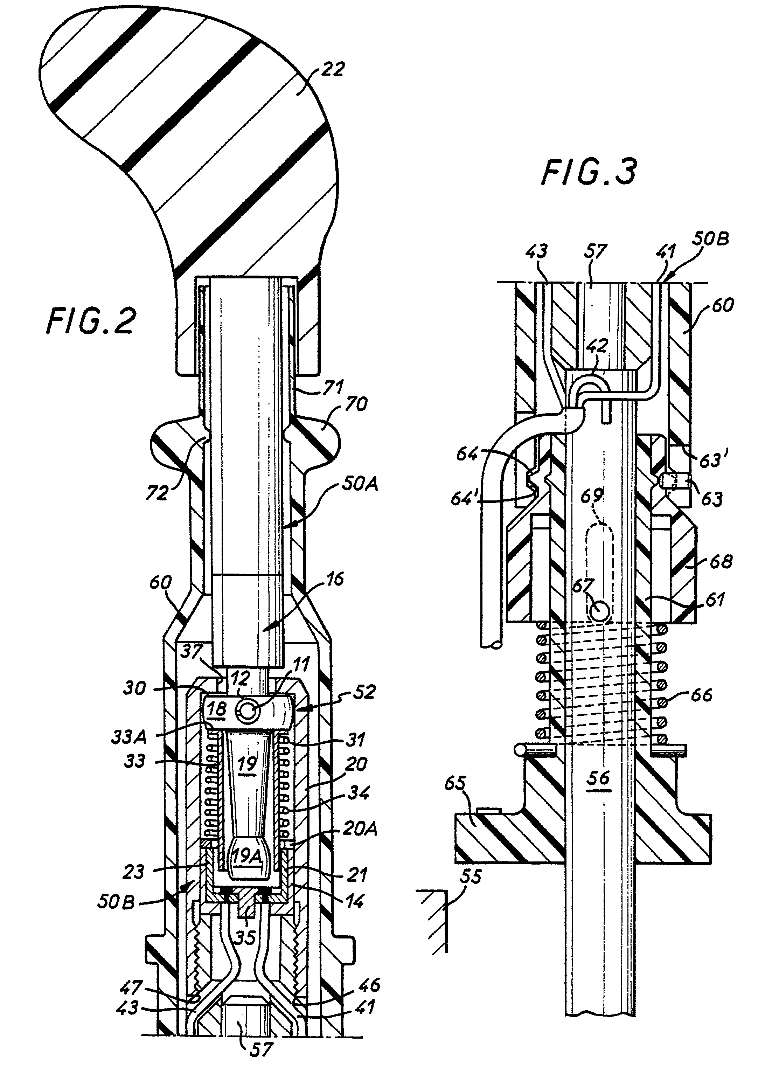

Plus en détail, comme représenté à la figure 2, le tronçon 50A est formé par une tige 16 à la partie supérieure de laquelle est fixé un pommeau de manoeuvre 22. La partie inférieure du tronçon 50A forme une rotule 18 délimitée par deux faces planes 30 et 31 pour assurer l'articulation 52 avec le tronçon 50B. Deux ergots 11 diamétralement opposés et solidaires de la rotule 18, coopèrent avec jeu avec deux ouvertures 12 dans le tronçon 50B pour empêcher toute rotation entre les tronçons 50A et 50B.

La face supérieure 30 est en appui contre la face supérieure d'une chambre de jonction 20 prévue à l'extrémité supérieure du tronçon 50B. Un orifice 37 de la face supérieure de la chambre de jonction 20 permet le passage du tronçon 50A.

La face inférieure 31 de la rotule 18 est en appui sur une collerette 33A d'une douille conductrice 33 montée avec jeu dans la chambre de jonction 20. La collerette 33A est soumise à l'action d'un ressort 34 entourant avec jeu la douille 33 et prenant axialement appui sur une rondelle 20A solidaire de la chambre 20. La douille 33 traverse avec jeu la rondelle 20A. Le ressort 34, par l'intermédiaire de la douille 33, maintient la face 30 de la rotule contre la face supérieure de la chambre 20, assurant ainsi le rappel élastique des tronçons 50A et 50B dans leur position alignée.

La rotule 18 se prolonge par un doigt 19 terminé par une partie renflée 19A ; ce doigt 19 est engagé avec jeu dans la douille 33. Dans la partie de la chambre de jonction 20 située en dessous de la rondelle 20A et limitée par une douille 14 sont disposées deux lames de contact en L 21 et 23, maintenues en place par une rondelle 20A prolongée par un téton 35.

Ces lames de contact en L sont en un métal conducteur, par exemple du cuivre, et sont connectées à des fils conducteurs 41 et 43 par les vis assurant leur mise ne place. Les fils 41 et 43 sortent du tronçon 50B à travers les rainures 46 et 47.

La partie supérieure creuse du tronçon 50B qui vient d'être décrite est emmanchée sur une saillie 57 d'une tige 56 continue formant la partie inférieure du tronçon 50B. Un fil conducteur 42 est connecté sur cette tige 56 pour établir une masse électrique.

Selon l'invention, le levier cassé tel que décrit est entouré d'un dispositif de sécurité pour empêcher l'enclenchement involontaire de la marche arrière. Ce système de sécurité est composé d'une jupe 60, montée coulissante autour du levier, dont l'extrémité supérieure est munie de moyens de manoeuvre sous la forme d'une saillie 70 servant de gâchette.

L'extrémité supérieure de la jupe forme un manchon 71 de faible épaisseur monté avec jeu sur la tige 16 et apte à se loger dans l'espace annulaire situé entre la tige 16 et le pommeau 22 lorsque l'on manoeuvre la jupe vers le haut. Une saillie radiale 72 sur la surface interne de la jupe assure le centrage de celle-ci sur la tige 16.

Un ressort non représenté peut être engagé entre la tige 16 et le manchon 71 pour amortir les bruits dus aux vibrations pouvant apparaître lors du fonctionnement du véhicule automobile.

La jupe 60 est solidaire en translation et en rotation d'un manchon 61 coulissant sur la tige 56.

Un élément annulaire 68 vient s'enclipser sur le manchon 61 par une gorge correspondant à une saillie radiale, au niveau axial d'une partie qui lui est accolée et se termine par une partie cylindrique de plus grand diamètre de façon à laisser subsister un espace annulaire creux dans lequel peut coulisser un ressort 66 qui entoure le manchon 61. L'élément 68 est muni d'une saillie radiale 64 coopérant avec une rainure 64'. La rainure 64' est prévue avec un fond légèrement concave et nettement plus large que l'extrémité de la saillie 64 qui lui est associée. Ces formes qui peuvent être obtenues facilement par moulage créent une liaison entre la jupe 60 et le manchon 61 tout en leur permettant un désalignement. Une goupille 63 est solidaire de l'ensemble 61,68 et coopère avec une rainure axiale 63' de la jupe 60 pour empêcher une rotation de la jupe autour du manchon.

La tige 56 est munie de deux ergots 67 diamétralement opposés faisant saillie à travers des lumières axiales 69 du manchon 61 et de l'élément annulaire 68. Ces ergots 67 coopèrent avec les lumières 69 pour guider axialement le manchon lors d'une translation en empêchant tout mouvement de rotation de celui-ci autour de la tige.

Le ressort 66 prend appui à son extrémité supérieure sur ces ergots 67 et à son extrémité inférieure sur une bride de butée du manchon solidaire du manchon 61. Cette bride de butée est une partie plane perpendiculaire à l'axe de la tige 56 et possédant un doigt radial 65 positionné en regard du trottoir de butée 55 fixe dans la position de repos.

Le dispositif selon l'invention ayant été décrit, son fonctionnement va maintenant être exposé.

Le levier 50A, 50B fonctionne d'une manière connue en soi et telle que décrite dans la demande de brevet FR N° 85 00 243 ci-dessus citée. Une sollicitation sur le tronçon 50A dans le plan de la figure 2 provoque une inclinaison de celui-ci. La face supérieure 30 de la rotule 18 prend appui sur la face supérieure de la chambre de jonction 20 et la face inférieure 31 qui reste en contact avec la douille 33 provoque une inclinaison de celle-ci jusqu'à ce que son extrémité vienne en contact avec une des lames 21, 23 afin de transmettre un ordre au système de commande de l'embrayage.

Le ressort 34 assure le retour en position de repos du levier lorsqu'il n'y a plus de sollicitation.

Le dispositif de sécurité pour empêcher l'enclenchement involontaire de la marche arrière a également un fonctionnement connu en soi : lorsque le conducteur du véhicule n'exerce aucune action sur la gâchette 70 de la jupe 60, le doigt radial 65 du manchon 61 est en regard du trottoir fixe 55 et empêche le mouvement du levier dans le sens du passage de la marche arrière. Lorsque le conducteur du véhicule désire enclencher la marche arrière il sollicite la jupe 60 en translation vers le haut au moyen de la gâchette 70. Les différents éléments 60, 61, 68 étant liés en translation sont déplacés vers le haut ; le doigt 65 se trouve alors dégagé du trottoir 55 et la marche arrière peut être enclenchée. Lors de la translation de la jupe vers le haut, les lumières 69 du manchon 61 et de l'élément annulaire 68 se déplacent également vis-à-vis des ergots 67 de la tige 56 jusqu'à ce que ceux-ci soient en butée à l'extrémité inférieure des lumières comme représenté figure 3. Le ressort 66 se trouve comprimé entre les ergots 67 et la bride de butée du manchon 61. Dès que le conducteur cesse son action sur la jupe, celle-ci est rappelée en position de repos, représentée à la figure 1, par le ressort 66.

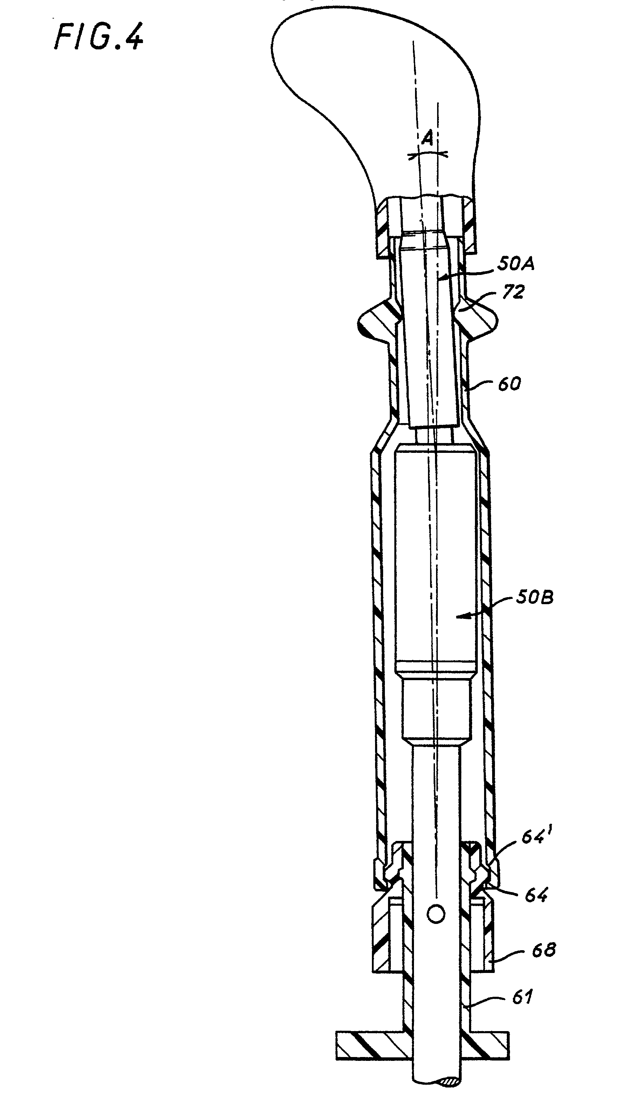

Lorsque, tel que représenté à la figure 4, le levier 50 est sollicité en translation le tronçon 50A s'incline. Le débattement angulaire A entre les tronçons 50A et 50B est toujours de valeur faible, de l'ordre de deux degrés environ.

Le jupe 60 centrée à sa partie supérieure sur le tronçon 50A par la saillie 72 s'incline d'un angle différent de l'angle A afin de se positionner autour du levier cassé 50A, 50B tout en restant en liaison avec le manchon 61 qui comme le tronçon 50B est resté fixe. La saillie 64 se déplaçant dans la rainure 64' forme une rotule pour permettre le désalignement entre la jupe et le manchon.

La possibilité donnée au dispositif de sécurité d'avoir des mouvements de désalignement au niveau de la saillie 72 et de la rotule (64,64') permet d'associer celui-ci à un levier cassé.

On notera que l'on peut agir en translation sur le levier cassé 50 pour commander un changement de vitesse et donner un ordre au système de commande quelle que soit la position, haute ou basse, du dispositif de sécurité.

L'invention ne se limite pas au mode de réalisation décrit, mais englobe également toutes variantes d'exécution, notamment en ce qui concerne le type de jonction avec jeu entre la jupe et le manchon solidaire de la bride de butée.

## Revendications

1. Dispositif de sécurité destiné à éviter l'enclenchement intempestif de la marche arrière en coopération avec un levier de vitesse (50) du type dit cassé, du genre comportant une jupe (60) disposée autour de ce dernier, mobile axialement en étant solidaire axialement d'un manchon coulissant (61) muni d'une bride de butée (65) escamotable qui coopère en position dite basse avec une butée fixe (55) pour empêcher certains mouvements déterminés du lervier de vitesse, caractérisé en ce que les moyens de solidarisation de ladite jupe (60) et dudit manchon coulissant (61) permettent à ces derniers un déplacement relatif dans au moins une direction perpendiculaire à l'axe du manchon.

2. Dispositif de sécurité destiné à éviter l'enclenchement intempestif de al marche arrière en coopération avec un levier de vitesse (50) du type dit cassé, du genre comportant une jupe (60) disposée autour de ce dernier, mobile axialement en étant solidaire axialement d'un manchon coulissant (61) mini d'une bride de butée (65) escamotable qui coopère en position dite basse avec une butée fixe (55) pour empêcher certains mouvements déterminés du levier de vitesse, caractérisé en ce que des moyens de centrage (72), de la jupe (60) autour de la partie supérieure (50A) du levier (50) permettent un déplacement relatif de celle-ci (60), dans au moins une direction perpendiculaire à l'axe de la partie supérieure (50A).

3. Dispositif de sécurité selon la revendication 1, caractérisé en ce que des moyens de centrage de la jupe (60) autour de la partie supérieure (50A) du levier (50) permettent un déplacement relatif de celle-ci dans au moins une direction perpendiculaire à l'axe de la partie supérieure (50A).

4. Dispositif de sécurité selon la revendication 1 ou 3, caractérisé en ce que les moyens de solidarisation sont des moyens de rotule (64, 64') permettant un désalignement entre la jupe (60) et le manchon coulissant (61).

5. Dispositif de sécurité selon la revendication 4, caractérisé en ce que le désalignement entre la jupe (60) et le manchon coulissant (61) est inférieur à celui nécessaire au fonctionnement du levier cassé.

6. Dispositif de sécurité selon la revendication 5, caractérisé en ce que les moyens de rotule sont formés par une nervure (64) se déplaçant dans une rainure (64').

7. Dispositif de sécurité selon la revendication 6, caractérisé en ce que la nervure (64) est prévue sur le manchon (61) et la rainure (64') est sur la jupe (60).

8. Dispositif de sécurité selon la revendication 2 ou 3, caractérisé en ce que les moyens de centrage sont formés par une saillie radiale (72) sur la face interne de la jupe.

## Patentansprüche

1. Sicherheitseinrichtung zur Vermeidung des ungewollten Einlegens des Rückwärtsganges im Zusammenwirken mit einem sogenannten gelenkigen Schalthebel (50) von der Art, die einen Mantel (60) enthält, der rund um den Hebel angeordnet ist, in Längsrichtung beweglich und fest mit einer Gleitmuffe (61) verbunden, die mit einem einziehbaren Anschlagflansch (65) versehen ist, der in der sogenannten unteren Stellung mit einem Festanschlag (55) zusammenwirkt, um bestimmte Bewegungen des Schalthebels zu verhindern, dadurch gekennzeichnet, daß die Mittel zur festen Verbindung des genannten Mantels (60) und der genannten Gleitmuffe (61) letzteren eine relative Verschiebung in wenigstens einer lotrecht zur Muffenachse verlaufenden Richtung ermöglichen.

2. Sicherheitseinrichtung zur Vermeidung des ungewollten Einlegens des Rückwärtsganges im Zusammenwirken mit einem sogenannten gelenkigen Schalthebel (50) von der Art, die einen Mantel (60) enthält, der rund um den Hebel angeordnet ist, in Längsrichtung beweglich und fest mit einer Gleitmuffe (61) verbunden, die mit einem einziehbaren Anschlagflansch (65) versehen ist, der in der sogenannten unteren Stellung mit einem Festanschlag (55) zusammenwirkt, um bestimmte Bewegungen des Schalthebels zu verhindern, dadurch gekennzeichnet, daß Mittel zur Zentrierung (72) des Mantels (60) um den oberen Teil (50A) des Hebels (50) herum eine relative Verschiebung des Mantels (60) in wenigstens einer lotrecht zur Achse des oberen Teils (50A) verlaufenden Richtung ermöglichen.

3. Sicherheitseinrichtung nach Anspruch 1, dadurch gekennzeichnet, daß Mittel zur Zentrierung des Mantels (60) rund um den oberen Teil (50A) des Hebels (50) eine relative Verschiebung des Mantels in weinigstens einer lotrecht zur Achse des oberen Teils (50A) verlaufenden Richtung gestatten.

4. Sicherheitseinrichtung nach Anspruch 4, dadurch gekennzeichnet, daß es sich bei den Befestigungsmitteln um Kugelgelenkmittel (64, 64') handelt, die einen Versatz zwischen dem Mantel (60) und der Gleitmuffe (61) erlauben.

5. Sicherheitseinrichtung nach Anspruch 4, dadurch gekennzeichnet, daß der Versatz zwischen dem Mantel (60) und der Gleitmuffe (61) kleiner ist als derjenige, der für die Funktion des gelenkigen Hebels erforderlich ist.

6. Sicherheitseinrichtung nach Anspruch 5, dadurch gekennzeichnet, daß die Kugelgelenkmittel aus einer Rippe (64) bestehen, die sich in einer Nut (64') bewegt.

7. Sicherheitseinrichtung nach Anspruch 6, dadurch gekennzeichnet, daß die Rippe (64) an der Muffe (61) vorgesehen ist und daß sich die Nut (64') am Mantel (60) befindet.

8. Sicherheitseinrichtung nach Anspruch 2 oder 3, dadurch gekennzeichnet, daß die Zentriermittel aus einem radialen Vorsprung (72) an der Innenfläche des Mantels besteht.

**Claims**

1. A security device for preventing accidental engagement of reverse gear, and for cooperating with a gear change lever (50) of the articulated type, the security device being of the kind comprising a skirt (60) arranged around the gear change lever and axially movable while being fixed in the axial sense with respect to a slidable sleeve member (61) having a retractable abutment flange (65) which cooperates in the position known as its lower position with a fixed abutment (55) for the purpose of preventing the gear change lever performing certain movements of predetermined kinds, characterized in that the securing means, for securing the said skirt (60) and the said slidable sleeve member (61) together, permits relative displacement between these latter in at least one direction perpendicular to the axis of the sleeve member.

2. A security device for preventing accidental engagement of reverse gear, and for cooperation with a gear change lever (50) of the articulated type, the security device being of the kind comprising a skirt (60) arranged around the gear change lever and axially movable while being fixed in the axial sense with respect to slidable sleeve member (61) having a retractable abutment flange (65) which cooperates in the position known as its lower position with a fixed abutment (55) for the purpose of preventing the gear change lever performing certain movements of predeterminded kinds, characterised in that centring means (72) for the skirt (60) surrounding the upper member (50A) of the lever (50) allow relative displacement of the skirt (60) in at least one direction perpendicular to the axis of the upper member (50A).

3. A safety device according to Claim 1, characterised in that centring means for the skirt (60) around the upper member (50A) of the lever (50) allow relative displacement of the latter in at least one direction perpendicular to the axis of the upper member (50A).

4. A safety device according to Claim 1 or Claim 3, characterised in that the securing means consist of knuckle means (64, 64'), permitting the skirt (60) and the slidable sleeve member (61) to move out of alignment with each other.

5. A safety device according to Claim 4, characterised in that the amount by which the skirt (60) and the slidable sleeve member (61) can move out of alignment with each other is smaller than that necessary for operation of the articulated lever.

6. A safety device according to Claim 5, characterised in that the knuckle means comprise a rib (64) displaceable within a groove 64').

7. A safety device according to Claim 6, characterised in that the rib (64) is provided on the sleeve member (61), and the groove (64') is on the skirt (60).

8. A safety device according to Claim 2 or claim 3, characterised in that the centring means comprise a radial projection (72) on the inner face of the skirt.

FIG.1

FIG.2

FIG.3

FIG.4

EP 0 225 211 B1